# EUROPEAN PATENT APPLICATION

(11) **EP 4 782 375 A1**
(43) Date of publication of application: **29.07.2026**
(21) Application number: 24918026.6
(22) Date of filing: 15.08.2024
(51) Int. Cl.: B65G 47/90, B25J 15/08

(54) **HANDLING APPARATUS, BATTERY PRODUCTION LINE, AND CONTROL METHOD FOR HANDLING APPARATUS**

(30) Priority: 17.01.2024 CN 202410066726
(71) Applicant: Contemporary Amperex Technology Co., Limited, Ningde, Fujian 352100 (CN)
(72) Inventor: MA, Shiwu, Ningde, Fujian 352100 (CN); FAN, Xiang, Ningde, Fujian 352100 (CN); ZHANG, Yifei, Ningde, Fujian 352100 (CN); YAN, Xuedong, Ningde, Fujian 352100 (CN)
(74) Representative: Lorenz Seidler Gossel Part. mbB
(86) International application number: PCT/CN2024/112514
(87) International publication number: WO 2025/152415

(57) **Abstract**

This disclosure discloses a carrying device, a battery production line, and a control method for carrying device, relating to the field of battery technology. The carrying device can reduce the risk of damage to a target object caused by collision during a carrying process of the target object. The carrying device includes: a transport apparatus, a gripping apparatus, and a detection apparatus; where the transport apparatus includes a first drive mechanism; and the gripping apparatus is disposed on the first drive mechanism and is configured to grip a target object. The detection apparatus is disposed on the gripping apparatus and is electrically connected to the first drive mechanism. When the detection apparatus has detected that the target object gripped by the gripping apparatus is about to experience a collision or has experienced a collision, the first drive mechanism can drive the gripping apparatus to move toward the transport apparatus. The carrying device provided by this disclosure is configured to carry objects.

## Description

### CROSS-REFERENCE TO RELATED APPLICATIONS

This disclosure is proposed based on and claims priority to Chinese Patent Application No. 202410066726.9, filed on January 17, 2024 and entitled "CARRYING DEVICE, BATTERY PRODUCTION LINE, AND CONTROL METHOD FOR CARRYING DEVICE", which is incorporated herein by reference in its entirety.

### TECHNICAL FIELD

This disclosure relates to the field of battery technology, in particular to a carrying device, a battery production line, and a control method for carrying device.

### BACKGROUND

New energy batteries are increasingly widely used in daily life and industry. For example, new energy vehicles equipped with batteries have been widely adopted, and batteries are also increasingly applied in fields such as energy storage.

During a battery production process, various components to be assembled need to be carried and transferred. For instance, in a process of carrying batteries, a carrying device is required to place individual batteries at target positions. However, during a process of placing the batteries, there is a risk of collision between a to-be-placed battery and a battery already placed at the target position. If the collision force is significant, it may cause damage to the battery that experiences a collision.

### SUMMARY

This disclosure provides a carrying device, a battery production line, and a control method for carrying device. During a process of carrying a target object, the risk of damage caused by collision can be reduced.

A first aspect of this disclosure provides a carrying device. The carrying device includes: a transport apparatus, a gripping apparatus, and a detection apparatus; where the transport apparatus includes a first drive mechanism; the gripping apparatus is disposed on the first drive mechanism and is configured to grip a target object. The detection apparatus is disposed on the gripping apparatus and is electrically connected to the first drive mechanism. When the detection apparatus has detected that the target object gripped by the gripping apparatus is about to experience a collision or has experienced a collision, the first drive mechanism drives the gripping apparatus to move toward the transport apparatus.

In the carrying device provided by this disclosure, since the transport apparatus is provided with the first drive mechanism, the gripping apparatus can be disposed on the first drive mechanism, enabling the first drive mechanism to drive the gripping apparatus to move in at least one direction, thereby implementing the carrying of the target object gripped by the gripping apparatus. Additionally, the gripping apparatus is provided with a detection apparatus, and the detection apparatus is electrically connected to the first drive mechanism. When the detection apparatus has detected that the target object gripped by the gripping apparatus is about to experience a collision or has experienced a collision, the first drive mechanism can be controlled promptly to drive the gripping apparatus to move toward the transport apparatus, thereby reducing the risk of damage to the target object caused by collision while the carrying device is carrying the target object.

In a possible implementation of this disclosure, the gripping apparatus includes a buffer component and a gripper component; one end of the buffer component is connected to the first drive mechanism; and the gripper component is mounted on an end of the buffer component away from the first drive mechanism. The buffer component is configured to maintain the gripper component at a position away from the first drive mechanism, or during a collision of the target object, the buffer component can move along a first direction to cause the gripper component to stop moving along the first direction.

In the technical solution of this disclosure, since the gripping apparatus is provided with a gripper component, the target object can be gripped by the gripper component. Additionally, the gripping apparatus is provided with a buffer component, and the gripper component is connected to the first drive mechanism via the buffer component, so that when the target object gripped by the gripper component experiences a collision, the buffer component can provide buffering and a specific control feedback time for the first drive mechanism, which can not only reduce the collision force on the target object but also provide the first drive mechanism with a sufficient execution time to perform a reverse driving action, thereby promptly driving the gripper component and the target object to move toward the transport apparatus.

In a possible implementation of this disclosure, the buffer component includes a guide member and an elastic member; one end of the guide member is connected to the first drive mechanism; the other end is movably connected to the gripper component and extends along the first direction; and the elastic member sleeves the guide member and is configured to maintain the gripper component at a position away from the first drive mechanism.

In the technical solution of this disclosure, since the buffer component is provided with an elastic member, the gripper component can move relative to the first drive mechanism along the first direction through the elastic member. Additionally, with the guide member, when a compression spring deforms along the first direction, the guide member can restrict a deformation direction of the compression spring and maintain the compression spring in a stable position.

In a possible implementation of this disclosure, the gripping apparatus further includes a gripping guide component, one end of the gripping guide component is connected to the first drive mechanism, and the other end is connected to the gripper component and configured to guide the gripper component to move along the first direction relative to the first drive mechanism.

In the technical solution of this disclosure, since the gripping apparatus is provided with a gripping guide component, and the gripper component and the first drive mechanism are connected via the gripping guide component, the gripping guide component can restrict and guide a movement direction of the gripper component, enabling the gripper component to move stably along the first direction relative to the first drive mechanism.

In a possible implementation of this disclosure, the gripping apparatus further includes a fixing member, the fixing member is fixedly connected to the first drive mechanism, one end of the buffer component is connected to a side of the fixing member away from the first drive mechanism, and one end of the gripping guide component is connected to the side of the fixing member away from the first drive mechanism.

In the technical solution of this disclosure, since the gripping apparatus is provided with a fixing member, and the fixing member can be configured in a structural form adapted to the first drive mechanism, the buffer component, and the gripping guide component, both the buffer component and the gripping guide component can be fixedly connected to the fixing member, and the fixing member is fixedly connected to the first drive mechanism, so that the fixing member provides a connection point for the gripping apparatus, facilitating the connection of the gripping apparatus to the first drive mechanism.

In a possible implementation of this disclosure, the gripping apparatus further includes a gripping bracket, an end of the buffer component away from the fixing member is connected to the gripping bracket, the gripping guide component is mounted on the gripping bracket, and the gripper component is connected to an end of the gripping bracket away from the fixing member.

In the technical solution of this disclosure, the provision of the gripping bracket in the gripping apparatus facilitates the connection of the buffer component and the gripping guide component to the gripping bracket, enabling the buffer component and the gripping guide component to be connected to and assembled with other structural components such as the gripper component in the gripping apparatus.

In a possible implementation of this disclosure, the gripping apparatus further includes a gripping drive component; the gripping drive component includes a gripping drive member and a gripping claw guide component; the gripping guide component is mounted on the gripping bracket; the gripping drive member is in transmission connection with the gripping claw guide component; the gripper component is fixedly mounted on the gripping claw guide component; and under the drive of the gripping drive member, the gripping claw guide component can drive the gripper component to move along a second direction, where the second direction forms an included angle with the first direction.

In the technical solution of this disclosure, since the gripping drive component is configured in a structural form including a gripping drive member and a gripping claw guide component, the gripper component can be mounted on the gripping claw guide component, allowing the gripping claw guide component to guide and restrict a movement path of the gripper component. Additionally, by the transmission connection between the gripping drive member and the gripping claw guide component, the gripping drive member can provide a driving force to the gripper component, enabling the gripper component to grip or release the target object.

In a possible implementation of this disclosure, the gripper component includes a first detection component and at least two gripping claws; the gripping claws are mounted on the gripping claw guide component; and the first detection component is mounted on the gripping claws and is configured to acquire state information of the target object on the gripping claws.

In the technical solution of this disclosure, since the gripper component is provided with at least two gripping claws, and the gripping claws are mounted on the gripping claw guide component of the gripping drive component, the gripping drive member can drive the at least two gripping claws to move relative to each other to complete a gripping or releasing action. Additionally, with the first detection component mounted on the gripping claws, the first detection component can detect whether the target object is located between the two gripping claws, thereby determining whether the gripper component has gripped the target object or released the target object.

In a possible implementation of this disclosure, the gripping apparatus further includes a second detection component, one end of the second detection component is connected to the gripping bracket, the other end is connected to the gripper component, and the second detection component is configured to acquire position information of the gripper component relative to the gripping bracket along the second direction.

In the technical solution of this disclosure, since the gripping apparatus is provided with a second detection component for acquiring the position information of the gripper component relative to the gripping bracket along the second direction, while the gripping drive component is driving the gripper component to move, the second detection component can determine whether the gripper component has moved to a position where the target object can be gripped or whether the gripper component has moved to a position where the target object can be released, facilitating accurate control of a movement route of the gripping apparatus, thereby reducing the risk that the gripping apparatus erroneously grips or fails to grip the target object.

In a possible implementation of this disclosure, the detection apparatus includes a third detection component, and the third detection component is connected to the gripper component and is configured to acquire distance information between the gripper component and a detected object.

In the technical solution of this disclosure, since the gripping apparatus is provided with a third detection component serving as the detection apparatus, the third detection component can acquire distance information between the gripper component and a detected object, so that the movement of the first drive mechanism can be controlled based on this distance information, thereby reducing the risk of collision between the target object carried by the gripping apparatus and the detected object.

In a possible implementation of this disclosure, the detection apparatus further includes a fourth detection component, one end of the fourth detection component is connected to the first drive mechanism, the other end is connected to the gripper component, and the fourth detection component is configured to acquire position information of the gripper component relative to the first drive mechanism along the first direction.

In the technical solution of this disclosure, since the fourth detection component is disposed between the first drive mechanism and the gripper component, when the target object gripped by the gripper component experiences a collision and thus causes the buffer component to deform along the first direction, the fourth detection component can acquire information about the movement of the gripper component relative to the first drive mechanism along the first direction, so that a control instruction can be promptly issued to the first drive mechanism to control the first drive mechanism to drive the gripper component and the target object to move along the first direction toward the transport apparatus, thereby reducing the risk of more severe collision to the target object.

In a possible implementation of this disclosure, the detection apparatus further includes a fifth detection component, the fifth detection component is disposed between the first drive mechanism and the gripper component, and the fifth detection component is configured to acquire a pressure received by the gripper component along the first direction toward the first drive mechanism.

In the technical solution of this disclosure, since the fifth detection component is disposed between the first drive mechanism and the gripper component to acquire a value of the pressure received by the gripper component along the first direction, and whether the target object gripped by the gripper component has experienced a collision can be determined based on a change in the value of the pressure received by the gripper component along the first direction, which is detected by the fifth detection component, and thus the first drive mechanism can be promptly controlled to separate the target object from a collided object.

In a possible implementation of this disclosure, the transport apparatus includes a transport bracket; the first drive mechanism includes a first drive member and a first guide component, the first guide component is mounted on the transport bracket, the first drive member is in transmission connection with the first guide component, the gripping apparatus is mounted on the first guide component, and the first drive member is configured to drive the first guide component to move along the first direction, thereby driving the gripping apparatus to move along the first direction.

In the technical solution of this disclosure, since the transport apparatus is provided with a transport bracket, the transport bracket can provide mounting points for components such as the first drive mechanism, and the transport apparatus can be fixedly installed at a corresponding workstation. Additionally, by providing the first guide component in the first drive mechanism, the first guide component can restrict and guide a movement path of the gripping apparatus, and by the transmission connection between the first drive member and the first guide component, the first drive member can provide a driving force to the gripping apparatus, enabling the gripping apparatus to move along the first direction.

In a possible implementation of this disclosure, the transport apparatus further includes a movement mechanism; the movement mechanism is mounted on the transport bracket; both the first drive member and the first guide component are mounted on the movement mechanism; and the movement mechanism is configured to drive the first guide component to move in a direction perpendicular to the first direction.

In the technical solution of this disclosure, since the transport apparatus includes a movement mechanism, and the first drive mechanism is mounted on the movement mechanism, the movement mechanism can drive the first drive mechanism to move in at least one direction perpendicular to the first direction, to drive the gripping apparatus to move within a larger range, enhancing the applicability of the carrying apparatus.

A second aspect of this disclosure provides a battery production line. The battery production line includes: a battery production device, a transfer device, and the carrying device provided in any implementation of the first aspect; where the battery production device is configured to produce a battery, and the battery includes at least one battery cell. The transfer device is configured to transfer a carried battery cell to a target workstation. The carrying device grips and places the battery cell on the transfer device or removes the battery cell carried by the transfer device.

The battery production line provided by this disclosure, including the carrying device provided in any implementation of the first aspect, can reduce the risk of damage to the battery cell caused by collision while the carrying device is carrying the battery.

A third aspect of this disclosure provides a control method for carrying device. The carrying device includes a transport apparatus, a gripping apparatus, and a detection apparatus. The control method for carrying device includes: in response to a carry instruction, controlling the gripping apparatus to grip a target object; controlling the transport apparatus to transport the gripping apparatus and the target object to a target position; and when the detection apparatus has detected that the target object is about to experience a collision or has experienced a collision, controlling the transport apparatus to drive the target object to move toward the transport apparatus.

In the control method for carrying device provided by this disclosure, since the gripping apparatus is controlled to grip the target object based on the carry instruction, the gripping apparatus can promptly and accurately grip the target object. Additionally, by controlling the transport apparatus to transport the target object to the target position, the target object can reach the target position promptly. In addition, the detection apparatus acquires distance information between the target object and other objects or acquires information about collision of the target object, so that whether the target object is about to experience a collision or has experienced a collision can be determined, and thus the transport apparatus can be promptly controlled to drive the gripping apparatus to move toward the transport apparatus, thereby reducing the risk of damage to the target object caused by collision while the carrying device is carrying the target object.

In a possible implementation of this disclosure, the transport apparatus includes a first drive mechanism. The detection apparatus includes a third detection component disposed on the gripping apparatus, and the third detection component is electrically connected to the first drive mechanism via a controller. The step of controlling the transport apparatus to drive the target object to move toward the transport apparatus when the detection apparatus has detected that the target object is about to experience a collision or has experienced a collision includes: when the third detection component has detected that a distance between the target object and a detected object is less than a preset distance threshold, issuing a return instruction to the first drive mechanism by the controller; and in response to the return instruction, driving the gripping apparatus to move away from the detected object by the first drive mechanism.

In the technical solution of this disclosure, since the third detection component can acquire the distance information between the target object and the detected object, whether a collision is likely to occur between the target object and the detected object can be determined based on this distance information and a preset distance threshold. When it is determined that the target object is about to experience a collision, a return instruction can be issued to the first drive mechanism, to drive the gripping apparatus to move away from the detected object, reducing the risk of collision between the target object and the detected object.

In a possible implementation of this disclosure, the transport apparatus includes a first drive mechanism, the gripping apparatus includes a gripper component, the detection apparatus includes a fourth detection component, one end of the fourth detection component is connected to the first drive mechanism, and the other end is connected to the gripper component, and the fourth detection component is electrically connected to the first drive mechanism via a controller. The step of controlling the transport apparatus to drive the target object to move toward the transport apparatus when the detection apparatus has detected that the target object is about to experience a collision or has experienced a collision includes: when the fourth detection component has detected that the gripper component moves along the first direction toward the first drive mechanism, issuing a return instruction to the first drive mechanism by the controller; and in response to the return instruction, driving the gripping apparatus to move toward the transport apparatus by the first drive mechanism.

In the technical solution of this disclosure, since the fourth detection component can acquire information about the gripper component moving toward the first drive mechanism, that is, can acquire information that the target object has experienced a collision, a return instruction can be issued to the first drive mechanism based on the information that the target object has experienced a collision, so that the gripping apparatus can be driven to move away from the collided object, thereby reducing the risk of more severe collision between the target object and the collided object.

In a possible implementation of this disclosure, the transport apparatus includes a first drive mechanism, the gripping apparatus includes a gripper component, the detection apparatus includes a fifth detection component, the fifth detection component is disposed between the first drive mechanism and the gripper component, and the fifth detection component is electrically connected to the first drive mechanism via a controller. The step of controlling the transport apparatus to drive the target object to move toward the transport apparatus when the detection apparatus has detected that the target object is about to experience a collision or has experienced a collision includes: when the fifth detection component has detected that a pressure received by the gripper component along the first direction toward the first drive mechanism is greater than or equal to a preset pressure threshold, issuing a return instruction to the first drive mechanism by the controller; and in response to the return instruction, driving the gripping apparatus to move toward the transport apparatus by the first drive mechanism.

In the technical solution of this disclosure, since the fifth detection component can acquire information about a value of the pressure received by the gripper component toward the first drive mechanism, that is, can acquire information that the target object has experienced a collision, a return instruction can be issued to the first drive mechanism based on the information that the target object has experienced a collision, so that the gripping apparatus can be driven to move away from the collided object, thereby reducing the risk of more severe collision between the target object and the collided object.

In a possible implementation of this disclosure, when the detection apparatus has detected that the target object is about to experience a collision or has experienced a collision, the control method for carrying device further includes: issuing a stop instruction to the transport apparatus, and in response to the stop instruction, stopping driving the target object to move toward the target position by the transport apparatus.

In the technical solution of this disclosure, since the stop instruction is issued to the transport apparatus based on the information that the target object is about to experience a collision or has experienced a collision acquired by the detection apparatus, the gripping apparatus can immediately stop moving toward the target position, preventing collision of the target object or stopping the collision process immediately, thereby reducing the risk of collision or more severe collision of the target object.

### BRIEF DESCRIPTION OF DRAWINGS

By reading the detailed description of the preferred embodiments below, various other advantages and benefits will become clear to those skilled in the art. The drawings are only for the purpose of illustrating the preferred embodiments and are not considered to limit this disclosure. Throughout the drawings, identical components are denoted by identical reference numerals. In the drawings:
FIG. 1 is a schematic structural diagram of a carrying device provided by this disclosure;
FIG. 2 is a schematic exploded view of a gripping apparatus and a detection apparatus in a carrying device provided by this disclosure;
FIG. 3 is a first schematic structural diagram of a gripping apparatus and a detection apparatus in a carrying device provided by this disclosure;
FIG. 4 is a second schematic structural diagram of a gripping apparatus and a detection apparatus in a carrying device provided by this disclosure;
FIG. 5 is a schematic exploded view of a gripper component in a gripping apparatus provided by this disclosure;
FIG. 6 is a first schematic flowchart of a control method for carrying device provided by this disclosure;
FIG. 7 is a second schematic flowchart of a control method for carrying device provided by this disclosure;
FIG. 8 is a third schematic flowchart of a control method for carrying device provided by this disclosure;
FIG. 9 is a fourth schematic flowchart of a control method for carrying device provided by this disclosure; and
FIG. 10 is a fifth schematic flowchart of a control method for carrying device provided by this disclosure.

### Description of reference numerals:

1. transport apparatus; 11. transport bracket; 12. movement mechanism; 13. first drive mechanism; 131. first drive member; 132. first guide component; 2. gripping apparatus; 21. fixing member; 22. buffer component; 221. guide member; 222. elastic member; 23. gripping guide component; 24. gripping bracket; 25. gripping drive component; 251. gripping drive member; 252. gripping claw guide component; 2521. guide rail; 2522. slider; 26. gripper component; 261. gripping claw; 2611. first fixing block; 2612. second fixing block; 2613. third fixing block; 2614. first gripping block; 2615. second gripping block; 2616. connecting member; 2617. anti-slip pad; 262. first detection component; 27. second detection component; 3. detection apparatus; 31. third detection component; 32. fourth detection component; 4. target object; A. first direction; and B. second direction.

### DESCRIPTION OF EMBODIMENTS

Embodiments of the technical solutions of this disclosure are described in detail below with reference to the drawings. The following embodiments are only configured to more clearly illustrate the technical solutions of this disclosure and are therefore merely examples, and are not intended to limit the scope of protection of this disclosure.

Unless otherwise defined, all technical and scientific terms used herein have the same meaning as commonly understood by those skilled in the technical field of this disclosure; the terms used herein are for the purpose of describing specific embodiments only and are not intended to limit this disclosure; and the terms "include", "comprise", and any variations thereof in the specification and drawings of this disclosure are intended to cover non-exclusive inclusion.

In the description of the embodiments of this disclosure, the technical terms "first", "second", "third", and the like are used only to distinguish different objects and should not be understood as indicating or implying relative importance or implicitly indicating the number, specific order, or primary-secondary relationship of the technical features indicated. In the description of the embodiments of this disclosure, "multiple" means two or more unless explicitly specified otherwise.

Reference to "embodiment" herein means that a particular feature, structure, or characteristic described in connection with the embodiment may be included in at least one embodiment of this disclosure. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein may be combined with other embodiments.

In the description of the embodiments of this disclosure, the term "and/or" merely describes an association relationship between associated objects, indicating that three relationships may exist. For example, X and/or Y may represent: only X is present, both X and Y are present, or only Y is present. Additionally, the character "/" herein generally indicates an "or" relationship between the contextually associated objects.

In the description of the embodiments of this disclosure, the technical terms "length", "width", "thickness", "upper", "lower", "front", "rear", "left", "right", "vertical", "horizontal", "top", "bottom", "inner", "outer", "circumferential", and the like indicate orientations or positional relationships based on the orientations or positional relationships shown in the drawings, and are only for the convenience of describing the embodiments of this disclosure and simplifying the description, not indicating or implying that the indicated apparatus or element must have a specific orientation or be constructed, operated, or used in a specific orientation, and thus should not be construed as limiting the embodiments of this disclosure.

In the description of the embodiments of this disclosure, unless explicitly specified and limited otherwise, the technical terms "mount", "connection", "join", "fastening", and the like should be broadly understood, for example, they may be fixed connections, detachable connections, or integral connections; they may be mechanical connections or electrical connections; they may be direct connections or indirect connections through an intermediary; and they may be internal communications between two elements or interactions between two elements. Those skilled in the art can understand the specific meanings of the above terms in the embodiments of this disclosure based on specific circumstances.

In the description of the embodiments of this disclosure, unless explicitly specified and limited otherwise, the technical term "contact" should be broadly understood, where it may be direct contact, contact through an intermediary layer, contact with substantially no interaction force between two objects in contact, or contact with interaction force between two objects in contact.

The following provides a detailed description of this disclosure.

Currently, new energy batteries are increasingly widely used in daily life and industry. New energy batteries are not only applied in energy storage systems for hydropower, thermal power, wind power, and solar power plants but are also widely used in electric vehicles such as electric bicycles, electric motorcycles, and electric cars, as well as in aerospace and other fields. With the continuous expansion of the application fields of traction batteries, their market demand is also continuously increasing.

In the embodiments of this application, a battery may include one or multiple battery cells, with the multiple battery cells connected in series, parallel, or series-parallel through a busbar component. The battery cell (also referred to as a "cell" hereinafter) may be a secondary battery, and the secondary battery is a battery cell that can be recharged to activate the active material for continued use after discharge.

The battery cell may be a lithium-ion battery, sodium-ion battery, sodium-lithium-ion battery, lithium metal battery, sodium metal battery, lithium-sulfur battery, magnesium-ion battery, nickel-hydrogen battery, nickel-cadmium battery, lead-acid battery, or the like, which is not limited in the embodiments of this application.

In some implementations, the battery cell may include a housing. The housing may be a steel shell, an aluminum shell, a plastic shell (for example, polypropylene), a composite metal shell (for example, a copper-aluminum composite shell), or an aluminum-plastic film. In some embodiments, the housing may be a sealed structure or a non-sealed structure. In an example, when the housing is a non-sealed structure, the housing serves to protect an electrode assembly, a sealing bag is further provided between the housing and the electrode assembly, and the sealing bag is configured to encapsulate the electrode assembly and an electrolyte. Specifically, the sealing bag may be a bag-shaped insulating member or an aluminum-plastic film. When the housing is a sealed structure, it is configured to encapsulate components such as the electrode assembly and the electrolyte.

In an example, the battery cell may be a cylindrical battery cell, a prismatic battery cell, a pouch battery cell, or a battery cell of other shapes. Prismatic battery cells include square-shell battery cells, blade-shaped battery cells, and multi-prismatic batteries, where the multi-prismatic batteries are, for example, hexagonal prismatic batteries, which is not particularly limited in this application.

In some implementations, the housing includes an end cover and a shell, where the shell is provided with an opening and the end cover covers the opening. The shell may be provided with one or more openings. One or more end covers may be provided as well.

In some implementations, the housing is provided with at least one electrode terminal, and the electrode terminal is electrically connected to a tab. The electrode terminal may be directly connected to the tab or indirectly connected to the tab through a current collector. The electrode terminal may be disposed on the end cover or on the shell.

During a battery production process, various components of a battery (such as a battery cell) need to be carried and transferred. For example, during a carrying process of a battery cell by a mechanical arm or a carrying device, when the battery cell is to be placed at a target position, there is a risk of collision between the battery cell to be placed and a battery cell already placed at the target position. If the collision between the two battery cells is minor, the collision may not cause significant damage to the battery cells. However, if the collision between the two battery cells causes a short circuit between two poles of the battery cells, irreversible damage to the battery cells may be caused, leading to the scrapping of the battery cells.

Therefore, during the carrying process of a target object such as a battery cell, it is necessary to prevent collision of the target object, or even in the case of a collision of the target object, the risk of damage to the target object caused by the collision can be reduced.

An embodiment of this disclosure provides a carrying device. It should be noted that for ease of description and illustration of the carrying device provided in this embodiment of this disclosure, the following describes the carrying device provided in this embodiment of this disclosure by using an example in which the carrying device is configured to carry battery cells. However, it is not limited that the carrying device provided by this embodiment of this disclosure is only configured to carry battery cells, and the carrying device provided in this embodiment of this disclosure can also be configured to carry battery packs, battery modules, or any other target objects and can be applied in production lines other than battery production lines.

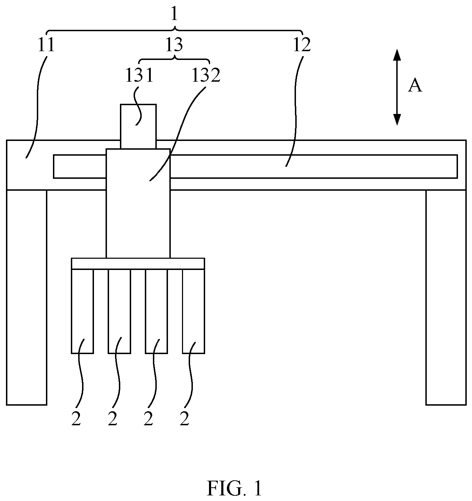

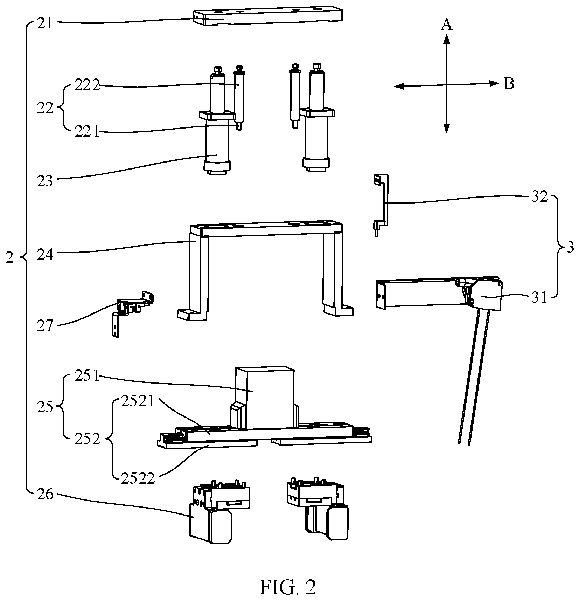

Reference is made to FIG. 1 and FIG. 2, where FIG. 1 is a schematic structural diagram of a carrying device provided by this disclosure, and FIG. 2 is a schematic exploded view of a gripping apparatus and a detection apparatus in a carrying device provided by this disclosure. As shown in FIG. 1 and FIG. 2, the carrying device provided in this embodiment of this disclosure includes: a transport apparatus 1, a gripping apparatus 2, and a detection apparatus 3; where the transport apparatus 1 includes a first drive mechanism 13; the gripping apparatus 2 is disposed on the first drive mechanism 13 and is configured to grip a target object; the detection apparatus 3 is disposed on the gripping apparatus 2 and is electrically connected to the first drive mechanism 13; and when the detection apparatus 3 has detected that the target object gripped by the gripping apparatus 2 is about to experience a collision or has experienced a collision, the first drive mechanism 13 can drive the gripping apparatus 2 to move toward the transport apparatus 1.

In this embodiment of this disclosure, the transport apparatus 1 is configured to drive the gripping apparatus 2 to move, enabling the gripping apparatus 2 to reach a predetermined position. For example, the transport apparatus 1 may be an apparatus with a first drive mechanism 13, and a vertical drive structure can move. Alternatively, the transport apparatus 1 may be a mechanical arm, and the mechanical arm can move in at least one direction.

In this embodiment of this disclosure, the gripping apparatus 2 is configured to grip a target object to be carried, and structural components such as gripping claws adapted to the shape of the target object may be provided on the gripping apparatus 2, to enable the gripping apparatus 2 to grip or release the target object. The gripping apparatus 2 may be disposed on the first drive mechanism 13, allowing the first drive mechanism 13 to drive the gripping apparatus 2 to move in at least one direction.

In this embodiment of this disclosure, the detection apparatus 3 may be electrically connected to the first drive mechanism 13. For example, the detection apparatus 3 may be directly electrically connected to the first drive mechanism 13, or the detection apparatus 3 may be electrically connected to a controller, and the controller is then electrically connected to the vertical drive structure. The detection apparatus 3 may alternatively be disposed on the gripping apparatus 2, so that the detection apparatus 3 can move together with the gripping apparatus 2 to detect a detected object or to detect movement of the gripping apparatus 2, to determine whether a posture of the gripping apparatus 2 has changed due to a collision of the target object.

Thus, while the first drive mechanism 13 is driving the gripping apparatus 2 to move, the detection apparatus 3 can acquire position information between the detected object and the target object gripped by the gripping apparatus 2. For example, distance information between the detected object and the target object can be acquired, so that whether the target object and the detected object are about to experience a collision or have experienced a collision can be determined based on this distance information. When it is determined that the target object and the detected object are about to experience a collision or have experienced a collision, a control instruction can be issued to the first drive mechanism 13 to cause the first drive mechanism 13 to perform an avoidance action, for example, to cause the first drive mechanism 13 to drive the gripping apparatus 2 to move toward the transport apparatus 1, that is, driving the gripping apparatus 2 and the target object to move away from the detected object or the collided object.

In the carrying device provided in this embodiment of this disclosure, since the transport apparatus 1 is provided with the first drive mechanism 13, the gripping apparatus 2 can be disposed on the first drive mechanism 13, enabling the first drive mechanism 13 to drive the gripping apparatus 2 to move in at least one direction, thereby implementing the carrying of the target object gripped by the gripping apparatus 2. Additionally, the gripping apparatus 2 is provided with a detection apparatus 3, and the detection apparatus 3 is electrically connected to the first drive mechanism 13. When the detection apparatus 3 has detected that the target object gripped by the gripping apparatus 2 is about to experience a collision or has experienced a collision, the first drive mechanism 13 can be promptly controlled to drive the gripping apparatus 2 to move toward the transport apparatus 1, thereby reducing the risk of damage to the target object caused by collision while the carrying device is carrying the target object.

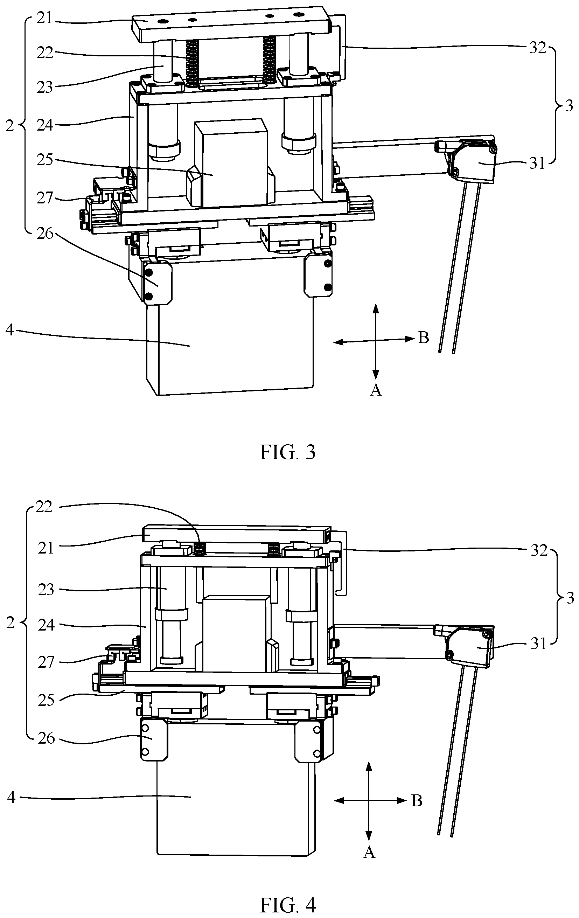

In some embodiments of this disclosure, reference is made to FIG. 3 and FIG. 4, where FIG. 3 is a first schematic structural diagram of a gripping apparatus and a detection apparatus in a carrying device provided in this disclosure; and FIG. 4 is a second schematic structural diagram of a gripping apparatus and a detection apparatus in a carrying device provided in this disclosure. As shown in FIG. 2, FIG. 3, and FIG. 4, the gripping apparatus 2 includes a buffer component 22 and a gripper component 26; one end of the buffer component 22 is connected to the first drive mechanism 13; the gripper component 26 is mounted on an end of the buffer component 22 away from the first drive mechanism 13; the buffer component 22 is configured to maintain the gripper component 26 at a position away from the first drive mechanism 13; or during a collision of a target object 4, the buffer component 22 can move along a first direction A to cause the gripper component 26 to stop moving along the first direction A.

In these embodiments of this disclosure, the gripping apparatus 2 may be provided with a gripper component 26. For example, the gripper component 26 may be configured as a structure including two gripping claws, or the gripper component 26 adapted to the target object 4 may be provided based on the characteristics of the gripped target object 4, to enable the gripper component 26 to grip the target object 4 or release the target object 4.

In these embodiments of this disclosure, the gripping apparatus 2 may be provided with a buffer component 22. For example, the buffer component 22 may be configured as an elastic structure. One end of the buffer component 22 may be connected to the first drive mechanism 13, and the gripper component 26 is disposed on a side of the buffer component 22 away from the first drive mechanism 13. Thus, under an acting force of the buffer component 22, the gripper component 26 can be maintained at a fixed position away from the first drive mechanism 13. Additionally, when the target object 4 gripped by the gripper component 26 has experienced a collision, the buffer component 22 can deform along the first direction A, and even if the first drive mechanism 13 continues to perform a driving action along the first direction A, the buffer component 22 can still reduce the force applied by the first drive mechanism 13 to the gripper component 26, and the gripper component 26 can stop moving along the first direction A.

In the above embodiments, since the gripping apparatus 2 is provided with the gripper component 26, the target object 4 can be gripped by the gripper component 26. Additionally, the gripping apparatus 2 is provided with the buffer component 22, and the gripper component 26 is connected to the first drive mechanism 13 via the buffer component 22, so that when the target object 4 gripped by the gripper component 26 has experienced a collision, the buffer component 22 can provide buffering and a specific control feedback time for the first drive mechanism 13, which can not only reduce the collision force on the target object 4 but also provide the first drive mechanism 13 with a sufficient execution time to perform a reverse driving action, thereby promptly driving the gripper component 26 and the target object 4 to move toward the transport apparatus 1.

In some embodiments of this disclosure, the buffer component 22 includes a guide member 221 and an elastic member 222; one end of the guide member 221 is connected to the first drive mechanism 13, and the other end is movably connected to the gripper component 26 and extends along the first direction A; and the elastic member 222 sleeves the guide member 221 and is configured to maintain the gripper component 26 at a position away from the first drive mechanism 13.

In these embodiments of this disclosure, as shown in FIG. 2, the buffer component 22 may be configured in a structural form including a guide member 221 and an elastic member 222. For example, two groups of buffer components 22 may be provided in the gripping apparatus 2.

In an example, the guide member 221 may be configured as a rod-shaped structure, where one end of the guide member 221 is fixedly connected to the first drive mechanism 13 and the other end of the guide member 221 is movably connected to the gripper component 26, for example, the other end of the guide member 221 is slidably connected to or sleeves the gripper component 26 through another structural component, and the guide member 221 extends along the first direction A.

In another example, the elastic member 222 may be a compression spring, and the compression spring sleeves the guide member 221, where one end of the compression spring is connected to the first drive mechanism 13 and the other end is connected to the gripper component 26.

In the above embodiments, since the buffer component 22 is provided with an elastic member 222, the gripper component 26 can move relative to the first drive mechanism 13 along the first direction A through the elastic member 222. Additionally, with the guide member 221, when the compression spring deforms along the first direction A, the guide member 221 can restrict a deformation direction of the compression spring and maintain the compression spring at a stable position.

In some embodiments of this disclosure, as shown in FIG. 2 and FIG. 3, the gripping apparatus 2 further includes a gripping guide component 23, one end of the gripping guide component 23 is connected to the first drive mechanism 13, and the other end is connected to the gripper component 26 and configured to guide the gripper component 26 to move along the first direction A relative to the first drive mechanism 13.

In these embodiments of this disclosure, the gripping apparatus 2 may be provided with a gripping guide component 23, for example, the gripping guide component 23 may include a guide post and a guide sleeve that are slidably connected in a sleeving manner. The guide component may alternatively include a guide rail and a slider that are slidably connected.

In an example, one of the guide post and the guide sleeve may be fixedly connected to the first drive mechanism 13, and the other may be connected to the gripper component 26. Additionally, the guide post and guide sleeve may be configured to extend along the first direction A, allowing the guide post to slide relative to the guide sleeve along the first direction A. Two groups of gripping guide components 23 may alternatively be provided in the gripping apparatus 2.

In the above embodiments, since the gripping apparatus 2 is provided with a gripping guide component 23, and the gripper component 26 and the first drive mechanism 13 are connected via the gripping guide component 23, the gripping guide component 23 can restrict and guide a movement direction of the gripper component, enabling the gripper component 26 to move stably along the first direction A relative to the first drive mechanism 13.

In some embodiments of this disclosure, as shown in FIG. 2 and FIG. 3, the gripping apparatus 2 further includes a fixing member 21, the fixing member 21 is fixedly connected to the first drive mechanism 13, one end of the buffer component 22 is connected to a side of the fixing member 21 away from the first drive mechanism 13, and one end of the gripping guide component 23 is connected to the side of the fixing member 21 away from the first drive mechanism 13.

In these embodiments of this disclosure, to facilitate the connection of the gripping apparatus 2 to the first drive mechanism 13, the fixing member 21 may be provided in the gripping apparatus 2. For example, the fixing member 21 may be configured according to a connection structure on the first drive mechanism 13 and the structural forms of the buffer component 22 and the gripping guide component 23. For example, the fixing member 21 is configured as a plate-shaped structure.

In an example, the plate-shaped fixing member 21 may be provided with a connection hole, and an acquisition fastener is used to fixedly connect the fixing member 21 to the first drive mechanism 13, where one end of the guide member 221 in the buffer component 22 is fixedly connected to the side of the fixing member 21 away from the first drive mechanism 13, and one of the guide post or guide sleeve in the gripping guide component 23 is fixedly connected to the side of the fixing member 21 away from the first drive mechanism 13.

In the above embodiments, since the gripping apparatus 2 is provided with a fixing member 21, and the fixing member 21 can be configured in a structural form adapted to the first drive mechanism 13, the buffer component 22, and the gripping guide component 23, both the buffer component 22 and the gripping guide component 23 can be fixedly connected to the fixing member 21, and the fixing member 21 is fixedly connected to the first drive mechanism 13, so that the fixing member 21 provides a connection point for the gripping apparatus 2, facilitating the connection of the gripping apparatus 2 to the first drive mechanism 13.

In some embodiments of this disclosure, as shown in FIG. 2 and FIG. 3, the gripping apparatus 2 further includes a gripping bracket 24, an end of the buffer component 22 away from the fixing member 21 is connected to the gripping bracket 24, the gripping guide component 23 is mounted on the gripping bracket 24, and the gripper component 26 is connected to an end of the gripping bracket 24 away from the fixing member 21.

In these embodiments of this disclosure, a gripping bracket 24 may alternatively be provided in the gripping apparatus 2, to facilitate the connection and assembly of the buffer component 22 and the gripping guide component 23 with other structural components such as the gripper component 26.

In an example, the gripping bracket 24 may be configured as a frame structure. For example, the gripping bracket 24 is configured as an approximately n-shaped structure, to be specific, the gripping bracket 24 may include three structural components: a first plate-shaped member, a second plate-shaped member, and a third plate-shaped member, where the second plate-shaped member and the third plate-shaped member are respectively connected to two ends of the first plate-shaped member, and both the second plate-shaped member and the third plate-shaped member are perpendicular or approximately perpendicular to the first plate-shaped member.

In another example, the first plate-shaped member of the gripping bracket 24 may be provided with a first through hole, where a diameter of the first through hole is greater than an outer diameter of the guide member 221 in the buffer component 22 but less than an outer diameter of the elastic member 222, allowing the guide member 221 to pass through the first through hole while an end of the elastic member 222 away from the fixing member 21 abuts against an edge of the first through hole. The first plate-shaped member may alternatively be provided with a second through hole, where a size of the second through hole is adapted to the guide post or guide sleeve in the gripping guide component 23, allowing the guide post or guide sleeve to be fixed in the second through hole.

In the above embodiments, the gripping apparatus 2 is provided with a gripping bracket 24, which facilitates the connection of the buffer component 22 and the gripping guide component 23 to the gripping bracket 24, enabling the buffer component 22 and the gripping guide component 23 to be connected to and assembled with other structural components such as the gripper component 26 in the gripping apparatus 2.

In some embodiments of this disclosure, as shown in FIG. 2 and FIG. 3, the gripping apparatus 2 further includes a gripping drive component 25, and the gripping drive component 25 includes a gripping drive member 251 and a gripping claw guide component 252. The gripping guide component 23 is mounted on the gripping bracket 24, the gripping drive member 251 is in transmission connection with the gripping claw guide component 252, and the gripper component 26 is fixedly mounted on the gripping claw guide component 252. Under the drive of the gripping drive member 251, the gripping claw guide component 252 can drive the gripper component 26 to move along a second direction B, where the second direction B forms an included angle with the first direction A.

In these embodiments of this disclosure, the gripping apparatus 2 may be provided with a gripping drive component 25, so that the gripping drive component 25 drives the gripper component 26 to move, allowing the target object 4 to be gripped or released.

In an example, the gripping drive component 25 may be configured to include a gripping drive member 251 and a gripping claw guide component 252, where the gripping drive member 251 is configured to provide a driving force, and the gripping claw guide component 252 is configured to guide and restrict a movement path of the gripper component 26.

In another example, the gripping claw guide component 252 may be configured in a structural form including a guide rail 2521 and a slider 2522 that are adapted to each other, where the guide rail 2521 extends along the second direction B, allowing the slider 2522 to slide along the second direction B. The second direction B and the first direction A may be two directions perpendicular to each other or may be two directions forming any included angle between 0 and 90°. The second direction B and the first direction A are not specifically limited in these embodiments of this disclosure.

In still another example, the gripping drive component 25 may be a component capable of performing a driving action, such as an air cylinder, an electric cylinder, a hydraulic cylinder, a stepping motor, or a servo motor. The guide rail 2521 may be fixedly connected to the gripping bracket 24, the gripping drive component 25 is mounted on the guide rail 2521, and the gripping drive component 25 may be in transmission connection with the slider 2522. The gripper component 26 may be fixedly mounted on the slider 2522. Thus, the gripping drive component 25 can drive the slider 2522 to move along the second direction B, thereby driving the gripper component 26 to move along the second direction B.

In the above embodiments, since the gripping drive component 25 is configured in a structural form including a gripping drive member 251 and a gripping claw guide component 252, the gripper component 26 can be mounted on the gripping claw guide component 252, allowing the gripping claw guide component 252 to guide and restrict the movement path of the gripper component 26. Additionally, the gripping drive member 251 and the gripping claw guide component 252 are in transmission connection with each other, the gripping drive member 251 can provide a driving force to the gripper component 26, enabling the gripper component 26 to grip or release the target object 4.

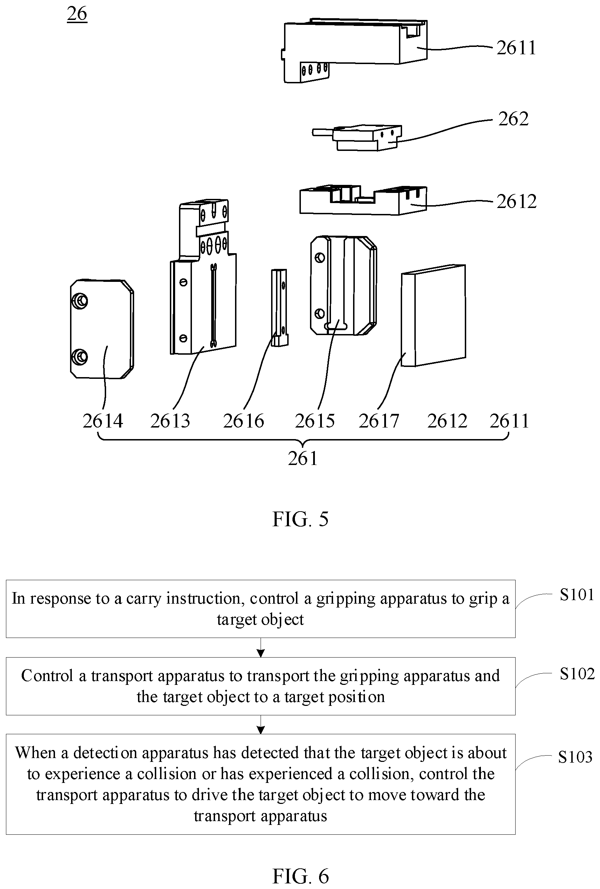

In some embodiments of this disclosure, reference is made to FIG. 5, where FIG. 5 is a schematic exploded view of a gripper component in a gripping apparatus provided by this disclosure. As shown in FIG. 2, FIG. 3, FIG. 4, and FIG. 5, the gripper component 26 includes a first detection component 262 and at least two gripping claws 261; the gripping claws 261 are mounted on the gripping claw guide component 252; and the first detection component 262 is mounted on the gripping claws 261 and is configured to acquire state information of a target object 4 on the gripping claws 261.

In these embodiments of this disclosure, the gripper component 26 may be configured in a structural form including at least two gripping claws 261, and the two gripping claws 261 are respectively fixedly mounted on two sliders 2522 in the gripping drive component 25, allowing the two gripping claws 261 to move toward or away from each other to achieve gripping and releasing actions.

In an example, the gripping claw 261 may be configured in a structural form including a first fixing block 2611, a second fixing block 2612, a third fixing block 2613, a first gripping block 2614, and a second gripping block 2615. The first fixing block 2611 is fixedly connected to the slider 2522 in the gripping drive component 25. The second fixing block 2612 is connected to the first fixing block 2611, and a mounting cavity can be formed between the second fixing block 2612 and the first fixing block 2611. The third fixing block 2613 is connected to one side of the first fixing block 2611 and is perpendicular to the first fixing block 2611. The first gripping block 2614 and the second gripping block 2615 are respectively fixed to both sides of the third fixing block 2613, so that a gripping cavity can be enclosed by the second fixing hole, the third fixing block 2613, the first gripping block 2614, and the second gripping block 2615.

In another example, at least one gripping claw 261 may be provided with a first detection component 262, and the first detection component 262 may be mounted in the mounting cavity formed between the second fixing block 2612 and the first fixing block 2611, and the first detection component 262 extends from the second fixing block 2612 to the gripping cavity. The first detection component 262 may be a position sensor, such as a contact switch or a proximity switch.

In still another example, the gripping claw 261 may alternatively be provided with a connecting member 2616 and an anti-slip pad 2617. The connecting member 2616 may be disposed on a side of the third fixing block 2613 facing the gripping cavity, and the anti-slip pad 2617 may be fixedly mounted on the third fixing block 2613 through the connecting member 2616, allowing the anti-slip pad 2617 to be located within the gripping cavity. For example, the anti-slip pad 2617 may be made of ethylene propylene diene monomer rubber, and the anti-slip pad 2617 is provided with an anti-slip groove to enhance the reliability and stability of the gripping claw 261 for gripping the target object 4.

In the above embodiments, since the gripper component 26 is provided with at least two gripping claws 261, and the gripping claws 261 are mounted on the gripping claw guide component 252 of the gripping drive component 25, the gripping drive member 251 can drive the at least two gripping claws 261 to move relative to each other to complete gripping or releasing actions. Additionally, with the first detection component 262 mounted on the gripping claws 261, the first detection component 262 can detect whether the target object 4 is located between the two gripping claws 261, thereby determining whether the gripper component 26 has gripped the target object 4 or released the target object 4.

In some embodiments of this disclosure, as shown in FIG. 2 and FIG. 3, the gripping apparatus 2 further includes a second detection component 27, one end of the second detection component 27 is connected to the gripping bracket 24, the other end is connected to the gripper component 26, and the second detection component 27 is configured to acquire position information of the gripper component 26 relative to the gripping bracket 24 along the second direction B.

In these embodiments of this disclosure, the gripping apparatus 2 may alternatively be provided with a second detection component 27, so that the second detection component 27 acquires position information of the gripping claws 261 in the gripper component 26.

In an example, the second detection component 27 may be a position sensor or a displacement sensor. For example, the second detection component 27 is a position switch, an electromagnetic sensor, a photoelectric sensor, or a Hall sensor. One part of the second detection component 27 may be mounted on the gripping bracket 24, and another part may be mounted on the slider 2522 in the gripping drive component 25, allowing the second detection component 27 to acquire a position of the gripping claw 261 relative to the gripping bracket 24 along the second direction B while the slider 2522 is driving the gripping claw 261 to move.

In the above embodiments, since the gripping apparatus 2 is provided with the second detection component 27 for acquiring position information of the gripper component 26 relative to the gripping bracket 24 along the second direction B, while the gripping drive component 25 is driving the gripper component 26 to move, the second detection component 27 can determine whether the gripper component 26 has moved to a position where the target object can be gripped or whether the gripper component 26 has moved to a position where the target object 4 can be released, facilitating accurate control of a movement route of the gripping apparatus 2, thereby reducing the risk that the gripping apparatus 2 erroneously grips or fails to grip the target object 4.

In some embodiments of this disclosure, as shown in FIG. 2 and FIG. 3, the detection apparatus 3 may be configured in a structural form including a third detection component 31, where the third detection component 31 is disposed on the gripper component 26 and is configured to acquire distance information between the gripper component 26 and a detected object.

In these embodiments of this disclosure, the detection apparatus 3 may be provided with a third detection component 31, and the third detection component 31 may be mounted on the gripping bracket 24 in the gripping apparatus 2 to connect the third detection component 31 to the gripper component 26.

In an example, the third detection component 31 may be a photoelectric proximity sensor, an ultrasonic proximity sensor, a capacitive proximity sensor, or the like. For example, the third detection component 31 may be a laser sensor, and the laser sensor can acquire a distance between the gripping apparatus 2 and the detected object while the gripping apparatus 2 is driving the target object 4 to move, thereby obtaining a distance between the target object 4 and the detected object. The laser sensor may alternatively be electrically connected to a controller, and the controller is electrically connected to a vertical drive component. The controller can determine whether the target object 4 is likely to collide with the detected object based on the distance information acquired by the laser sensor. A preset distance threshold for a collision between the target object 4 and the detected object may be set, and when an actual distance between the target object 4 and the detected object is less than or equal to the preset distance threshold, the controller can issue a control instruction to the first drive mechanism 13, to allow the first drive mechanism 13 to drive the gripping apparatus 2 to move away from the detected object.

In the above embodiments, since the gripping apparatus 2 is provided with a third detection component 31 serving as the detection apparatus 3, the third detection component 31 can acquire distance information between the gripper component 26 and the detected object, so that the movement of the first drive mechanism 13 can be controlled based on this distance information, thereby reducing the risk of collision between the target object 4 carried by the gripping apparatus 2 and the detected object.

In some embodiments of this disclosure, as shown in FIG. 2 and FIG. 3, the detection apparatus 3 further includes a fourth detection component 32, one end of the fourth detection component 32 is connected to the first drive mechanism 13, the other end is connected to the gripper component 26, and the fourth detection component 32 is configured to acquire position information of the gripper component 26 relative to the first drive mechanism 13 along the first direction A.

In these embodiments of this disclosure, the detection apparatus 3 may be provided with a fourth detection component 32, the fourth detection component 32 may be electrically connected to a controller, and the controller is then electrically connected to the first drive mechanism 13. The fourth detection component 32 is configured to acquire position information of the gripper component 26 relative to the first drive mechanism 13 along the first direction A, that is, can acquire information about whether the target object 4 gripped by the gripper component 26 has experienced a collision with another object.

In an example, the fourth detection component 32 may be a position sensor, for example, a sensor such as a position switch, or a Hall sensor. One part of the fourth detection component 32 may be mounted on the fixing member 21 in the gripping apparatus 2, and another part may be mounted on the gripping bracket 24 in the gripping apparatus 2, allowing the fourth detection component 32 to be connected to both the first drive mechanism 13 and the gripper component 26. Thus, when the target object 4 gripped by the gripper component 26 has experienced a collision and thus causes the buffer component 22 to be compressed, that is, when the gripper component 26 moves relative to the first drive mechanism 13 along the first direction A, the fourth detection component 32 can promptly acquire this information.

In the above embodiments, since the fourth detection component 32 is disposed between the first drive mechanism 13 and the gripper component 26, when the target object 4 gripped by the gripper component 26 has experienced a collision and thus causes the buffer component 22 to deform along the first direction A, the fourth detection component 32 can acquire information about the movement of the gripper component 26 relative to the first drive mechanism 13 along the first direction A, so that a control instruction can be promptly issued to the first drive mechanism 13 to control the first drive mechanism 13 to drive the gripper component 26 and the target object 4 to move toward the transport apparatus 1 along the first direction A, thereby reducing the risk of more severe collision of the target object 4.

In some embodiments of this disclosure, the detection apparatus 3 further includes a fifth detection component, the fifth detection component is disposed between the first drive mechanism 13 and the gripper component 26, and the fifth detection component is configured to acquire a pressure received by the gripper component 26 along the first direction A toward the first drive mechanism 13.

In these embodiments of this disclosure, the detection apparatus 3 may alternatively be provided with a fifth detection component, the fifth detection component may be electrically connected to a controller, and the controller is then electrically connected to the first drive mechanism 13. The fifth detection component is configured in a structural form capable of acquiring a magnitude of the pressure received by the gripper component 26 toward the first drive mechanism 13.

In an example, the fifth detection component may include a pressure sensor. For example, the pressure sensor may be disposed at a position where the elastic member 222 in the buffer component 22 abuts against the fixing member 21, or the pressure sensor may be disposed at a position on the gripper component 26 that can abut against the target object 4. By setting a threshold for the pressure sensor, when the target object 4 has experienced a collision, the pressure sensor can detect information indicating that the target object 4 has experienced a collision.

In the above embodiments, since the fifth detection component for acquiring a value of the pressure value received by the gripper component 26 along the first direction A is disposed between the first drive mechanism 13 and the gripper component 26, and whether the target object 4 gripped by the gripper component 26 has experienced a collision can be determined based on a change in the value of the pressure received by the gripper component 26 along the first direction A that is detected by the fifth detection component, so that the first drive mechanism 13 can be promptly controlled to separate the target object 4 from the collided object.

In some embodiments of this disclosure, as shown in FIG. 1, the transport apparatus 1 further includes a transport bracket 11; the first drive mechanism 13 includes a first drive member 131 and a first guide component 132; the first guide component 132 is mounted on the transport bracket 11; the first drive member 131 is in transmission connection with the first guide component 132; the gripping apparatus 2 is mounted on the first guide component 132; and the first drive member 131 is configured to drive the first guide component 132 to move along the first direction A, thereby driving the gripping apparatus 2 to move along the first direction A.

In these embodiments of this disclosure, the transport apparatus 1 may be provided with a transport bracket 11, so that the transport bracket 11 provides mounting points for other components in the transport apparatus 1. For example, the transport bracket 11 may be configured as a frame structure.

In these embodiments of this disclosure, the first drive mechanism 13 may be configured in a structural form including a first drive member 131 and a first guide component 132. For example, the first drive member 131 may be a driving member such as a servo motor, a stepping motor, an air cylinder, a hydraulic cylinder, or an electric cylinder. The first guide component 132 may include a guide rail and a slider that are slidably connected, or the like. The guide rail may be fixedly mounted on the transport bracket 11, the gripping apparatus 2 is mounted on the slider, and the first drive member 131 is in transmission connection with the slider, enabling the first drive member 131 to drive the slider to move along the first direction A.

In the above embodiments, since the transport apparatus 1 is provided with a transport bracket 11, the transport bracket 11 can provide mounting points for components such as the first drive mechanism 13, and the transport apparatus 1 can be fixedly installed at a corresponding workstation. Additionally, a first guide component 132 is provided in the first drive mechanism 13, so that the first guide component 132 can restrict and guide a movement path of the gripping apparatus 2, and the first drive member 131 and the first guide component 132 are in transmission connection with each other, so that the first drive member 131 can provide a driving force to the gripping apparatus 2, enabling the gripping apparatus 2 to move along the first direction A.

In some embodiments of this disclosure, as shown in FIG. 1, the transport apparatus 1 further includes a movement mechanism 12; the movement mechanism 12 is mounted on the transport bracket 11; both the first drive member 131 and the first guide component 132 are mounted on the movement mechanism 12; and the movement mechanism 12 is configured to drive the first guide component 132 to move in a direction perpendicular to the first direction A.

In these embodiments of this disclosure, the transport apparatus 1 may alternatively be provided with a movement mechanism 12, and the movement mechanism 12 may be configured according to an application scenario of the carrying apparatus. The movement mechanism 12 is mounted on the transport bracket 11, and both the first guide component 132 and the first drive member 131 are mounted on the movement mechanism 12, allowing the movement mechanism 12 to drive the first drive mechanism 13 to move in a direction perpendicular to the first direction A.

In an example, the movement mechanism 12 may be configured in a structural form including a second drive member and a second guide component, where the second guide component is mounted on the transport bracket 11, and a movement direction of the second guide component is perpendicular or approximately perpendicular to the first direction A. The second drive member is mounted on the transport bracket 11 and is in transmission connection with the second guide component. A vertical drive structure may be mounted on the second guide component, allowing the second drive member to drive the first drive mechanism 13 to move in a direction perpendicular to the first direction A.

In another example, the movement mechanism 12 may alternatively be provided with a third drive member and a third guide component, where the third guide component is mounted on the second guide component, and the third guide component moves in a direction perpendicular to the first direction A and a direction perpendicular to the movement direction of the second guide component. The third drive member is mounted on the second guide component and is in transmission connection with the third guide component. The first drive mechanism 13 may be mounted on the third guide component, allowing the third drive member to drive the first drive mechanism 13 to move in another direction perpendicular to the first direction A.

In the above embodiments, since the transport apparatus 1 is provided with a movement mechanism 12, and the first drive mechanism 13 is mounted on the movement mechanism 12, the movement mechanism 12 can drive the first drive mechanism 13 to move in at least one direction perpendicular to the first direction A, to drive the gripping apparatus 2 to move within a larger range, enhancing the applicability of the carrying apparatus.

Additionally, an embodiment of this disclosure further provides a battery production line. The battery production line includes: a battery production device, a transfer device, and the carrying device provided in any one of the above embodiments; where the battery production device is configured to produce a battery; the battery includes at least one battery cell; the transfer device is configured to transfer a carried battery cell to a target workstation; and the carrying device grips and places the battery cell on the transfer device or removes the battery cell carried by the transfer device.

In this embodiment of this disclosure, the battery production device may be a device configured to produce various components for constituting a battery (including battery cells), or a device configured to assemble various components in a battery (including battery cells).

In this embodiment of this disclosure, the transfer device may be a device configured to transport one or more carried battery cells. For example, the transfer device may be a device such as a transport cart, a transport platform, or a conveyor line, and the transfer device can transport battery cells to various target workstations.

In this embodiment of this disclosure, the carrying device provided in the above embodiment can grip one or more battery cells from a workstation and place them on the transfer device. Alternatively, when the transfer device reaches a target workstation, the carrying device can grip and place the battery cell from the transfer device to the corresponding target workstation.

The battery production line provided by this embodiment of this disclosure includes the carrying device provided in any one of the above embodiments, so that while the carrying device is carrying a battery cell, the risk of damage to the battery cell caused by collision can be reduced.

Additionally, an embodiment of this disclosure further provides a control method for carrying device, where the carrying device includes a transport apparatus, a gripping apparatus, and a detection apparatus. Reference is made to FIG. 6, where FIG. 6 is a first schematic flowchart of a control method for carrying device provided by this disclosure. As shown in FIG. 6, the control method for carrying device includes the following steps S101 to S103.

S101: In response to a carry instruction, control the gripping apparatus to grip a target object.

In some embodiments, the carry instruction may be generated in response to an operation of a user for the carrying device, or generated in response to the transfer device reaching a target workstation, or generated in response to the target object reaching a target position. A generation scenario for the carry instruction is not limited in these embodiments of this disclosure.

In some embodiments, during a process of carrying a target object, it is necessary to first grip the target object. After the carrying device receives the carry instruction, the gripping apparatus can be controlled to grip the target object. In an example, the gripping drive member in the gripping apparatus can be controlled to perform a gripping drive action to drive gripping claws in the gripper component to move toward each other, so that the target object can be gripped between the two gripping claws to complete the gripping of the target object.

S102: Control the transport apparatus to transport the gripping apparatus and the target object to a target position.

In some embodiments, after the gripping apparatus grips the target object, the target object can be transported to the target position. At this time, the first drive mechanism in the transport apparatus can be controlled to drive the gripping apparatus to move along the first direction toward the transport apparatus, ensuring a sufficient safety distance between the target object and other objects. Then, the movement mechanism in the transport apparatus can be controlled to drive the gripping apparatus to move in a direction perpendicular to the first direction, transporting the target object to a position aligned with the target position, for example, transporting the target object above the target position. Subsequently, the first drive mechanism can be controlled to drive the gripping apparatus to move along the first direction toward the target position until the target object is transported to the target position. Finally, the gripper component in the gripping apparatus can be controlled to release the target object, to replace the target object at the target position.

S103: When the detection apparatus has detected that the target object is about to experience a collision or has experienced a collision, control the transport apparatus to drive the target object to move toward the transport apparatus.

In some embodiments, while the transport apparatus is transporting the target object to the target position, whether a collision is about to occur or has occurred because the target object is too close to other objects can be determined based on the information acquired by the detection apparatus. At this time, a control instruction can be issued to the transport apparatus to cause the transport apparatus to drive the gripping apparatus, that is, driving the target object to move toward the transport apparatus, thereby separating the target object from the collided object or making the target object move away from an object the target object is about to collide with.

In the above embodiments, since the gripping apparatus is controlled to grip the target object based on the carry instruction, the gripping apparatus can promptly and accurately grip the target object. Additionally, by controlling the transport apparatus to transport the target object to the target position, the target object can reach the target position promptly. In addition, the detection apparatus acquires distance information between the target object and other objects or acquires information indicating that the target object has experienced a collision, so that whether the target object is about to experience a collision or has experienced a collision can be determined, which can promptly control the transport apparatus to drive the gripping apparatus to move toward the transport apparatus, thereby reducing the risk of damage to the target object caused by collision while the carrying device is controlled to carry the target object.

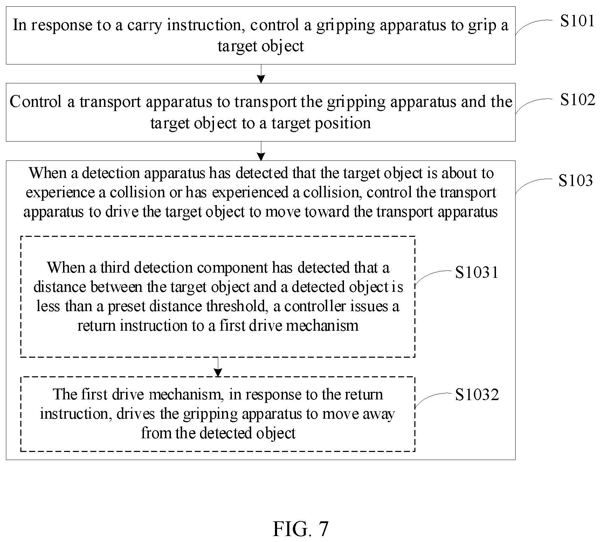

Reference is made to FIG. 7, where FIG. 7 is a second schematic flowchart of a control method for carrying device provided by this disclosure. The transport apparatus in the carrying device includes a first drive mechanism. The detection apparatus includes a third detection component disposed on the gripping apparatus, and the third detection component is electrically connected to the first drive mechanism via a controller. As shown in FIG. 6, step S103 in FIG. 6 can be implemented through the following steps S1031 to S1032.

S1031: When the third detection component has detected that a distance between the target object and a detected object is less than a preset distance threshold, the controller issues a return instruction to the first drive mechanism.

In some embodiments, the third detection component may be configured as an element capable of acquiring the distance between the target object and the detected object. While the first drive mechanism in the transport apparatus is driving the gripping apparatus to move toward the target position for placing the target object, the third detection component can promptly acquire the distance information between the target object and the detected object.

In some embodiments, when the third detection component has detected that the distance between the target object and the detected object is less than the preset distance threshold, it indicates that the target object is about to collide with the detected object. At this time, the controller can issue a return instruction to the first drive mechanism.

S1032: The first drive mechanism, in response to the return instruction, drives the gripping apparatus to move away from the detected object.

In some embodiments, after the first drive mechanism receives the return instruction, the first drive mechanism immediately performs a return drive action, that is, driving the gripping apparatus to move away from the detected object, and thus causing the target object to move away from the detected object.

In the above embodiments, since the third detection component can acquire the distance information between the target object and the detected object, whether a collision is likely to occur between the target object and the detected object can be determined based on this distance information and the preset distance threshold. When it is determined that the target object is about to experience a collision, a return instruction can be issued to the first drive mechanism, so that the gripping apparatus can be driven to move away from the detected object, reducing the risk of collision between the target object and the detected object.

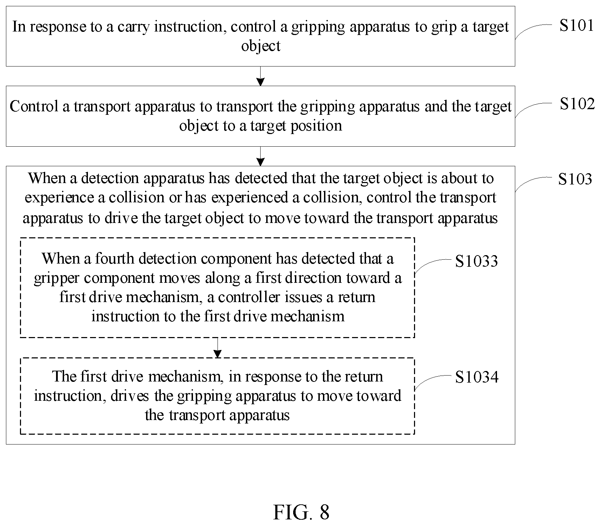

Reference is made to FIG. 8, where FIG. 8 is a third schematic flowchart of a control method for carrying device provided by this disclosure. A transport apparatus in the carrying device includes a first drive mechanism, the gripping apparatus includes a gripper component, the detection apparatus includes a fourth detection component, one end of the fourth detection component is connected to the first drive mechanism, the other end is connected to the gripper component, and the fourth detection component is electrically connected to the first drive mechanism via a controller. As shown in FIG. 6, step S103 in FIG. 6 can be implemented through the following steps S1033 to S1034.

S1033: When the fourth detection component has detected that the gripper component moves along the first direction toward the first drive mechanism, the controller issues a return instruction to the first drive mechanism.

In some embodiments, the fourth detection component may be configured as an element capable of acquiring information about the gripper component moving toward the first drive mechanism along the first direction. While the first drive mechanism in the transport apparatus is driving the gripping apparatus to move toward the target position for placing the target object, if the fourth detection component has detected that the gripper component moves toward the first drive mechanism, it indicates that the target object may have experienced a collision.

In some embodiments, when the fourth detection component has detected that the target object has experienced a collision, the controller can issue a return instruction to the first drive mechanism.

S1034: The first drive mechanism, in response to the return instruction, drives the gripping apparatus to move toward the transport apparatus.

In some embodiments, after the first drive mechanism receives the return instruction, the first drive mechanism immediately performs a return drive action, that is, driving the gripping apparatus to move toward the transport apparatus, and thus causing the target object to leave and move away from the collided object.

In the above embodiments, since the fourth detection component can acquire information about the gripper component moving toward the first drive mechanism, that is, can acquire information that the target object has experienced a collision, a return instruction can be issued to the first drive mechanism based on the information that the target object has experienced a collision, so that the gripping apparatus is driven to move away from the collided object, reducing the risk of more severe collision between the target object and the collided object.

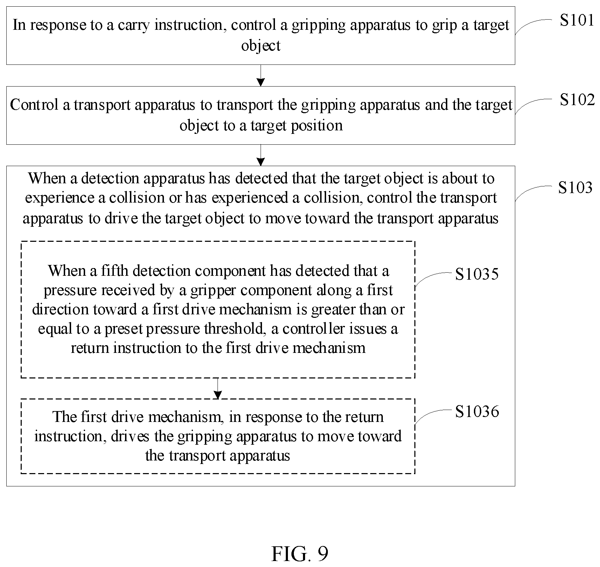

Reference is made to FIG. 9, where FIG. 9 is a fourth schematic flowchart of a control method for carrying device provided by this disclosure. The transport apparatus in the carrying device includes a first drive mechanism, the gripping apparatus includes a gripper component, the detection apparatus includes a fifth detection component, the fifth detection component is disposed between the first drive mechanism and the gripper component, and the fifth detection component is electrically connected to the first drive mechanism via a controller. As shown in FIG. 6, step S103 in FIG. 6 can be implemented through the following steps S1035 to S1036.

S1035: When the fifth detection component has detected that a pressure received by the gripper component along the first direction toward the first drive mechanism is greater than or equal to a preset pressure threshold, the controller issues a return instruction to the first drive mechanism.

In some embodiments, the fifth detection component may be configured as an element capable of acquiring a value of the pressure received by the gripper component along the first direction toward the first drive mechanism. While the first drive mechanism in the transport apparatus is driving the gripping apparatus to move toward the target position for placing the target object, if the target object has experienced a collision, the value of the pressure acquired by the fifth detection component changes, and if the value of the pressure acquired by the fifth detection component is greater than a preset pressure threshold, it indicates that the target object may have experienced a collision.

In some embodiments, when the fifth detection component has detected that the target object has experienced a collision, the controller can issue a return instruction to the first drive mechanism.

S1036: The first drive mechanism, in response to the return instruction, drives the gripping apparatus to move toward the transport apparatus.

In some embodiments, after the first drive mechanism receives the return instruction, the first drive mechanism immediately performs a return drive action, that is, driving the gripping apparatus to move toward the transport apparatus, and thus causing the target object to leave and move away from the collided object.

In the above embodiments, since the fifth detection component can acquire information about the value of the pressure received by the gripper component toward the first drive mechanism, that is, can acquire information that the target object has experienced a collision, a return instruction can be issued to the first drive mechanism based on the information that the target object has experienced a collision, so that the gripping apparatus is driven to move away from the collided object, reducing the risk of more severe collision between the target object and the collided object.

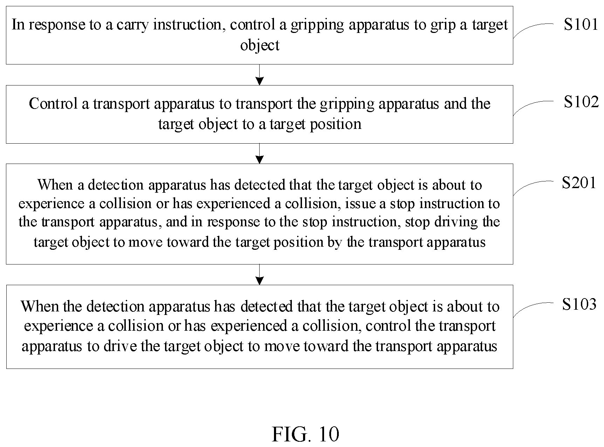

Reference is made to FIG. 10, where FIG. 10 is a fifth schematic flowchart of a control method for carrying device provided by this disclosure. As shown in FIG. 6, the control method for carrying device further includes step S201.

S201: When the detection apparatus has detected that the target object is about to experience a collision or has experienced a collision, issue a stop instruction to the transport apparatus, and in response to the stop instruction, stop driving the target object to move toward the target position by the transport apparatus.

In some embodiments, when the detection apparatus has detected that the target object gripped by the gripping apparatus is about to experience a collision or has experienced a collision, a stop instruction can be issued to the transport apparatus via a controller. After the transport apparatus receives the stop instruction, the transport apparatus immediately stops the drive action, causing the gripping apparatus to stop moving toward the target position, thereby stopping the target object from moving toward the target position.

In the above embodiments, since a stop instruction is issued to the transport apparatus based on the information acquired by the detection apparatus which indicates that the target object is about to experience a collision or has experienced a collision, the gripping apparatus can immediately stop moving toward the target position, that is, preventing the target object from collision or stopping the collision process immediately, thereby reducing the risk of collision or more severe collision of the target object.

The above embodiments are only used to illustrate the technical solutions of this disclosure and are not intended to limit this disclosure; although this disclosure has been described in detail with reference to the foregoing embodiments, those skilled in the art should understand that they can still modify the technical solutions described in the foregoing embodiments or make equivalent substitutions for some or all of the technical features; and these modifications or substitutions do not cause the essence of the corresponding technical solutions to depart from the scope of the technical solutions of the embodiments of this disclosure and should be included within the scope of the specification of this disclosure. In particular, as long as there is no structural conflict, the technical features mentioned in the various embodiments can be combined in any manner.

## Claims

1. A carrying device, comprising:
a transport apparatus, the transport apparatus comprising a first drive mechanism;
a gripping apparatus, the gripping apparatus comprising a buffer component and a gripper component, wherein one end of the buffer component is connected to the first drive mechanism, the gripper component is mounted on an end of the buffer component away from the first drive mechanism, and during a collision of a target object, the buffer component is capable of moving along a first direction to cause the gripper component to stop moving along the first direction; and
a detection apparatus, the detection apparatus being disposed on the gripping apparatus and electrically connected to the first drive mechanism;
wherein when the detection apparatus has detected that the target object gripped by the gripping apparatus is about to experience a collision or has experienced a collision, the first drive mechanism drives the gripping apparatus to move toward the transport apparatus.

2. The carrying device according to claim 1, wherein the buffer component is further configured to maintain the gripper component at a position away from the first drive mechanism.

3. The carrying device according to claim 2, wherein the buffer component comprises a guide member and an elastic member; one end of the guide member is connected to the first drive mechanism; the other end is movably connected to the gripper component and extends along the first direction; and the elastic member sleeves the guide member and is configured to maintain the gripper component at a position away from the first drive mechanism.

4. The carrying device according to claim 2 or 3, wherein the gripping apparatus further comprises a gripping guide component, one end of the gripping guide component is connected to the first drive mechanism, and the other end is connected to the gripper component and configured to guide the gripper component to move along the first direction relative to the first drive mechanism.

5. The carrying device according to claim 4, wherein the gripping apparatus further comprises a fixing member, the fixing member is fixedly connected to the first drive mechanism, one end of the buffer component is connected to a side of the fixing member away from the first drive mechanism, and one end of the gripping guide component is connected to the side of the fixing member away from the first drive mechanism.

6. The carrying device according to claim 5, wherein the gripping apparatus further comprises a gripping bracket, an end of the buffer component away from the fixing member is connected to the gripping bracket, the gripping guide component is mounted on the gripping bracket, and the gripper component is connected to an end of the gripping bracket away from the fixing member.

7. The carrying device according to claim 6, wherein the gripping apparatus further comprises a gripping drive component; the gripping drive component comprises a gripping drive member and a gripping claw guide component; the gripping guide component is mounted on the gripping bracket; the gripping drive member is in transmission connection with the gripping claw guide component; the gripper component is fixedly mounted on the gripping claw guide component; and under the drive of the gripping drive member, the gripping claw guide component is capable of driving the gripper component to move along a second direction, wherein the second direction forms an included angle with the first direction.

8. The carrying device according to claim 7, wherein the gripper component comprises a first detection component and at least two gripping claws; the gripping claws are mounted on the gripping claw guide component; and the first detection component is mounted on the gripping claws and is configured to acquire state information of the target object on the gripping claws.

9. The carrying device according to claim 7 or 8, wherein the gripping apparatus further comprises a second detection component, one end of the second detection component is connected to the gripping bracket, the other end is connected to the gripper component, and the second detection component is configured to acquire position information of the gripper component relative to the gripping bracket along the second direction.

10. The carrying device according to any one of claims 2 to 9, wherein the detection apparatus comprises a third detection component, and the third detection component is connected to the gripper component and is configured to acquire distance information between the gripper component and a detected object.

11. The carrying device according to any one of claims 2 to 10, wherein the detection apparatus further comprises a fourth detection component, one end of the fourth detection component is connected to the first drive mechanism, the other end is connected to the gripper component, and the fourth detection component is configured to acquire position information of the gripper component relative to the first drive mechanism along the first direction.

12. The carrying device according to any one of claims 2 to 11, wherein the detection apparatus further comprises a fifth detection component, the fifth detection component is disposed between the first drive mechanism and the gripper component, and the fifth detection component is configured to acquire a pressure received by the gripper component along the first direction toward the first drive mechanism.

13. The carrying device according to any one of claims 1 to 12, wherein the transport apparatus comprises a transport bracket; the first drive mechanism comprises a first drive member and a first guide component; the first guide component is mounted on the transport bracket; the first drive member is in transmission connection with the first guide component; the gripping apparatus is mounted on the first guide component; and the first drive member is configured to drive the first guide component to move along the first direction, to drive the gripping apparatus to move along the first direction.

14. The carrying device according to claim 13, wherein the transport apparatus further comprises a movement mechanism; the movement mechanism is mounted on the transport bracket; both the first drive member and the first guide component are mounted on the movement mechanism; and the movement mechanism is configured to drive the first guide component to move in a direction perpendicular to the first direction.

15. A battery production line, comprising:
a battery production device, wherein the battery production device is configured to produce a battery, and the battery comprises at least one battery cell;
a transfer device, wherein the transfer device is configured to transfer a carried battery cell to a target workstation; and
the carrying device according to any one of claims 1 to 14, wherein the carrying device grips and places the battery cell on the transfer device or removes the battery cells carried by the transfer device.

16. A control method for carrying device, wherein the carrying device comprises a transport apparatus, a gripping apparatus, and a detection apparatus, the gripping apparatus comprises a buffer component and a gripper component; and the method comprises:
in response to a carry instruction, controlling the gripper component in the gripping apparatus to grip a target object;
controlling the transport apparatus to transport the gripping apparatus and the target object to a target position; and
when the detection apparatus has detected that the target object is about to experience a collision or has experienced a collision, controlling the transport apparatus to drive the target object to move toward the transport apparatus;
wherein during a collision of the target object, the buffer component moves along a first direction to cause the gripper component to stop moving along the first direction.

17. The control method for carrying device according to claim 16, wherein the transport apparatus comprises a first drive mechanism, the detection apparatus comprises a third detection component disposed on the gripping apparatus, and the third detection component is electrically connected to the first drive mechanism via a controller, wherein the step of controlling the transport apparatus to drive the target object to move toward the transport apparatus when the detection apparatus has detected that the target object is about to experience a collision or has experienced a collision comprises:
when the third detection component has detected that a distance between the target object and a detected object is less than a preset distance threshold, issuing a return instruction to the first drive mechanism by the controller; and
in response to the return instruction, driving the gripping apparatus to move away from the detected object by the first drive mechanism.

18. The control method for carrying device according to claim 16 or 17, wherein the transport apparatus comprises a first drive mechanism, the detection apparatus comprises a fourth detection component, one end of the fourth detection component is connected to the first drive mechanism, the other end is connected to the gripper component, and the fourth detection component is electrically connected to the first drive mechanism via a controller, wherein the step of controlling the transport apparatus to drive the target object to move toward the transport apparatus when the detection apparatus has detected that the target object is about to experience a collision or has experienced a collision comprises:
when the fourth detection component has detected that the gripper component moves along the first direction toward the first drive mechanism, issuing a return instruction to the first drive mechanism by the controller; and
in response to the return instruction, driving the gripping apparatus to move toward the transport apparatus by the first drive mechanism.

19. The control method for carrying device according to any one of claims 16 to 18, wherein the transport apparatus comprises a first drive mechanism, the detection apparatus comprises a fifth detection component, the fifth detection component is disposed between the first drive mechanism and the gripper component, and the fifth detection component is electrically connected to the first drive mechanism via a controller, wherein the step of controlling the transport apparatus to drive the target object to move toward the transport apparatus when the detection apparatus has detected that the target object is about to experience a collision or has experienced a collision comprises:
when the fifth detection component has detected that a pressure received by the gripper component along the first direction toward the first drive mechanism is greater than or equal to a preset pressure threshold, issuing a return instruction to the first drive mechanism by the controller; and
in response to the return instruction, driving the gripping apparatus to move toward the transport apparatus by the first drive mechanism.

20. The control method for carrying device according to any one of claims 16 to 19, wherein when the detection apparatus has detected that the target object is about to experience a collision or has experienced a collision, the control method for carrying device further comprises:
issuing a stop instruction to the transport apparatus, wherein the transport apparatus, in response to the stop instruction, stops driving the target object to move toward the target position.
